# EUROPÄISCHE PATENTSCHRIFT

(11) **EP 0 857 507 B1**
(45) Veröffentlichungstag und Bekanntmachung des Hinweises auf die Patenterteilung: **20.06.2001**
(21) Anmeldenummer: 97121109.9
(22) Anmeldetag: 02.12.1997
(51) Int. Cl.: B01D 24/28, B01D 46/34, C02F 3/22

(54) **Filter mit Schüttgut**
Filter with bed of granular material
Filtre à lit granulaire

(30) Priorität: 05.02.1997 DE 19704238
(43) Veröffentlichungstag der Anmeldung: 12.08.1998
(73) Patentinhaber: GRABOWSKI Tropfkörper-Technik GmbH, 61239 Ober-Mörlen (DE)
(72) Erfinder: Grabowski, Gunther, Dipl.-Ing., 35428 Langgöns (DE)
(74) Vertreter: Schlagwein, Udo, Dipl.-Ing.

(56) Entgegenhaltungen:
- EP-A- 0 128 234
- EP-A- 0 174 037
- EP-B- 0 169 606
- DE-A- 2 040 909
- DE-A- 2 126 631
- DE-A- 3 432 377
- DE-C- 329 176
- US-A- 3 716 969
- US-A- 4 861 472

## Beschreibung

Die Erfindung betrifft ein Filter mit einer horizontal durchströmten, Schüttgut als Filtermedium aufweisenden Filterkammer, welche an der Anströmseite und Abströmseite jeweils eine durchlässige Wand zum Zurückhalten des Schüttgutes in der Filterkammer hat und in der eine als Druckluftheber ausgebildete Pumpe zum Fördern des Schüttgutes in einem unteren Trichter der Filterkammer einen Heberfuß hat, von dem aus ein Steigrohr durch die Filterkammer zu einem oberen Spülraum führt.

Ein Filter der vorstehenden Art ist Gegenstand der EP 0 128 234. Bei dem in dieser Schrift gezeigten Filter strömt das Spülwasser vom Rohwassereinlass des Filters im unteren Bereich durch das Schüttgut zu dem Heberfuß.

Die US 4,399,034 offenbart ein Filter für Flüssigkeiten, wobei die Flüssigkeit das Filtermedium schräg nach oben statt vertikal oder horizontal durchströmt. Das in einem rechteckigen oder zylindrischen Gehäuse als Filtermedium enthaltene Filtergranulat wird aus einer Trichterspitze abgezogen und zum Rückspülen in eine über dem Filter liegende Waschzone mit nachfolgender Verteilervorrichtung gefördert. Die Außenwände des Filters weisen schrägstehende Schlitze für den Flüssigkeitsaustritt auf, während die Zuführung der zu reinigenden Flüssigkeit über mehrere übereinanderstehende Einlasskegel erfolgt, die mittig im unteren Teil der Filtervorrichtung angeordnet sind. Um das verunreinigte Filtergranulat aus der Trichterspitze abpumpen zu können, wird Spülwasser aus der Waschzone in die Trichterspitze gepumpt.

Das Filter gemäß der US 4,399,034 hat den vorrangigen Nachteil einer sehr kleinen Filtereintrittsfläche, die sich um die Einlasskegel herum ausbildet. Sie ist im Verhältnis zur Größe der Filteraustrittsfläche und zu dem insgesamt großen Filtervolumen viel zu klein. Im Eintrittsbereich wird sich das Filtermedium deshalb sehr schnell mit Verunreinigungen zusetzen, so dass der Filterwiderstand nach kurzer Betriebsdauer stark ansteigt. Um die relativ geringe Menge an Filtermaterial im Eintrittsbereich auszuwechseln, muss eine deutlich größere Menge an wenig verschmutztem Filtermaterial abgezogen und zwangsläufig mitbehandelt werden. Ein weiterer Nachteil ergibt sich daraus, dass die Eintritts- und Austrittsschlitze jeweils senkrecht untereinander angeordnet sind. Das auf den schrägen Schlitzflächen aufliegende Filtermaterial wird von dem senkrecht abrutschenden Fließbett nicht erfasst und verbackt zu einer festsitzenden Barriere, wodurch sich die freie Durchtrittsfläche verringert. Sowohl das große Bauvolumen des Filters als auch die verschiedenen ein- und ausführenden Leitungen erfordern eine freistehende Aufstellung und allseitige Zugangsmöglichkeit, was einen nachträglichen Einbau des Filters in ein bestehendes Abwasserbecken ausschließt.

Horizontal durchströmte Schüttgutfilter in der Abwassertechnik wurden bislang nicht eingesetzt, obgleich eine horizontal gerichtete Durchströmung sehr günstige Bedingungen für die Bauform des Filters, seinen Betrieb sowie eine vielgestaltige Einsetzbarkeit bietet.

Der vorliegenden Erfindung liegt das Problem zugrunde, ein horizontal durchströmtes Filter der eingangs genannten Art zu schaffen, welches einen möglichst geringen Strömungswiderstand hat und auch unter ungünstigen Bedingungen nicht zu einem Verstopfen neigt.

Dieses Problem wird erfindungsgemäß dadurch gelöst, dass der Trichter bodennahe Eintrittsschlitze aufweist und von einem Vorlageraum umgeben ist, welcher mit einem ihn mit einem Rohwasserraum verbindenden Spülwasser-Einlaufrohr versehen ist.

Bei einem solchen Filter wird zur Reinigung des Filtermediums das Schüttgut im unteren Bereich der Filterkammer kontinuierlich oder periodisch abgezogen und ihr oben erneut zugeführt. Dabei wird das Schüttgut von den Schmutzpartikeln befreit und das Spülwasser getrennt abgezogen. Der Druckluftheber benötigt viel Flüssigkeit für die Förderung des Schüttgutes, jedoch kann hierzu durch die bodennahen Eintrittsschlitze Rohwasser unmittelbar von außen aus dem Klärbecken benutzt werden. Da die Flüssigkeitsmenge, die der Druckluftheber fördert, größer ist als die, die gleichzeitig durch das Schüttgut in die Filterkammer zurückfließen kann, kommt es zu einem Aufstau im Spülraum, der in bestimmter Höhe angeordnete Ablauföffnungen aufweist, durch die das mit Schmutzpartikeln verunreinigte Rohwasser abgeleitet wird. Das Filtermedium selbst wird also durch den erhöhten Flüssigkeitsbedarf für den Transport des Schüttgutes nicht belastet.

Zur weiteren Verbesserung der Reinigungswirkung trägt es bei, wenn das Steigrohr im Spülraum tangential an eine bogenförmige Umlenkvorrichtung anschließend endet. Eine solche Umlenkvorrichtung unterstützt die Abscheidung des Schüttgutes von dem mit Schmutzpartikeln verunreinigten Rohwasser durch die auftretenden Fliehkräfte.

Vorhandene Klärbecken können ohne größere Umbauten leicht nachträglich mit dem erfindungsgemäßen Filter versehen werden, wenn die Filterkammern als aneinandersetzbare Moduleinheiten ausgebildet sind. Hierdurch kann man durch Aneinandersetzen mehrerer Filterkammern eine gewünschte Filterleistung erreichen.

Ganz besonders vorteilhaft ist es, wenn die Filterkammern oder mehrere, aneinandergesetzte Filterkammern als Sperrwand eines horizontal durchströmten Klärbeckens zur Abwasserreinigung angeordnet sind. Hierdurch wird der strömungsmäßig hinter der Filterkammer oder den Filterkammern liegende Bereich des Klärbeckens zum Reinwasserbereich, aus dem das gefilterte Abwasser auf dem schon ohne das Filter vorgesehenen Weg aus dem Klärbecken herausfließen kann.

Alternativ ist es jedoch auch möglich, an der Abströmseite der Filterkammer einen mit der Filterkammer eine Baueinheit bildenden Filtratsammelraum anzuordnen. Eine solche Ausführungsform ermöglicht es, in ein Klärbecken an beliebigen Stellen das erfindungsgemäße Filter anzuordnen, beispielsweise an zwei Seitenwänden. Das Filtrat fällt dann jeweils im Filtratsammelraum des Filters an, von wo es abzusaugen ist. Dabei können die einzelnen Einheiten sowohl hintereinander zur Erhöhung des Filtereffektes als auch parallel zur Erhöhung der Durchsatzmenge angeordnet sein. Sie lassen sich in einfacher Weise in bestehende Einrichtungen einpassen. Auch eine Ausführung als Insellösung zur Einbringung in stillstehendes Medium ist in einfacher Weise zu realisieren, wobei dann das Filtrat nach oben abgezogen werden kann.

Das zu reinigende Medium kann der Filterkammer auch genau wie bei dem eingangs als Stand der Technik erwähnten, runden Filter von oben zugeführt werden, wenn an der Anströmseite der Filterkammer ein mit der Filterkammer eine Baueinheit bildender vertikaler Einlauf angeordnet ist.

Der Austritt des Filtermedium aus den beiden durchlässigen Wänden ohne Verhinderung des ständigen Austauschs des Schüttgutes im Bereich der Durchlässe kann dadurch vermieden werden, dass die Wände übereinander und nebeneinander mehrere, versetzt angeordnete Durchflussöffnungen haben, welche jeweils auf der Innenseite mit einem vordachartigen Winkelblech nach oben und zur Seite hin abgeschirmt sind, wobei die Spitze des Winkelbleches nach oben weist und ihre beiden Schenkel unter die Unterkante der jeweiligen Durchflussöffnung hinausreichen. Solche vordachartigen Winkelbleche verhindern zuverlässig einen Austritt von Schüttgut, vermeiden jedoch Ansammlungen von Schüttgut im Bereich der Durchlässe, die nicht selbsttätig nach unten rutschen und deshalb nicht gereinigt und erneuert werden können.

Die Erfindung lässt zahlreiche Ausführungsformen zu. Drei davon sind schematisch in der Zeichnung dargestellt und werden nachfolgend beschrieben. Diese zeigt in
- Fig. 1: einen Längsschnitt durch einen Teilbereich eines Klärbeckens mit dem erfindungsgemäßen Filter,
- Fig.2: eine Draufsicht auf einen Teilbereich eines Klärbeckens mit einem an einer Seitenwand angeordneten erfindungsgemäßen, mehrzelligen Filter mit Filtersammelraum und Filtratpumpe,
- Fig.3: einen Vertikalschnitt durch einen Teilbereich der Filterkammer, von vorn gesehen,
- Fig.4: den in Fig. 3 gezeigten Bereich als Vertikalschnitt von der Seite gesehen.

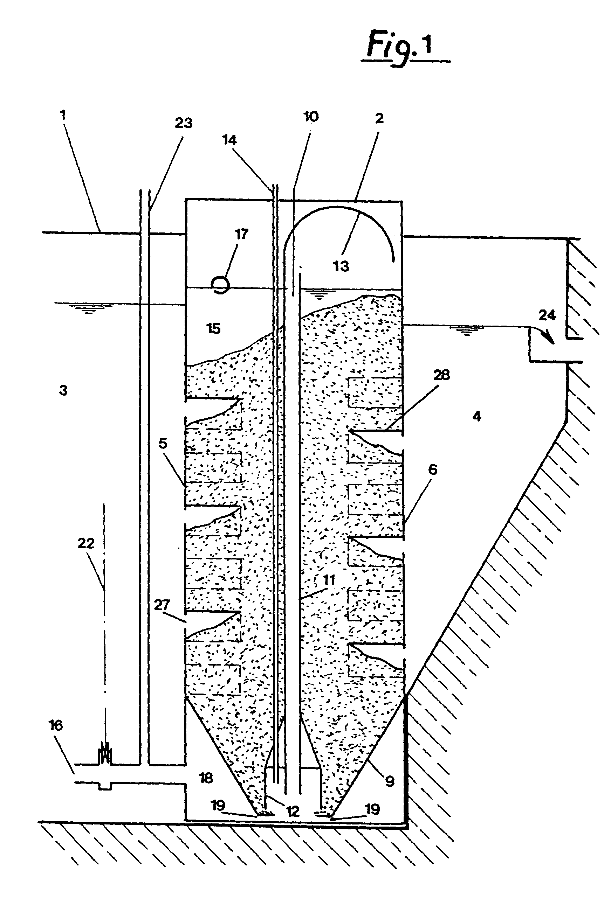

Die Figur 1 zeigt ein Klärbecken 1, in welches von oben her eine im Querschnitt rechteckige Filterkammer 2 eingesetzt ist, die das Klärbecken 1 in einen Rohwasserraum 3 und eine Filtratkammer 4 aufteilt. Die Filterkammer 2 ist sowohl an der Anströmseite als auch an der Abströmseite jeweils von einer durchlässigen Wand 5, 6 begrenzt, welche über- und nebeneinander zahlreiche, in das Innere der Filterkammer 2 ragende Winkelbleche 28 hat.

Im Inneren der Filterkammer 2 ist als Filtermedium Schüttgut 8 vorhanden, bei dem es sich vorzugsweise um Sand handelt und welches bis oberhalb der obersten Winkelbleche 28 in die Filterkammer 2 gefüllt wurde. An ihrer Unterseite hat die Filterkammer 2 einen oder mehrere Trichter 9, welche quadratischen Querschnitt haben. Eine Pumpe 10, welche als Druckluftheber (Mammutpumpe) ausgebildet ist, dient bei diesem Ausführungsbeispiel als Förderaggregat für den Abzug des Schüttgutes 8 aus dem Trichter 9 und hat ein Steigrohr 11, das einen Heberfuß 12 mit einer im oberen Teil der Filterkammer 2 befindlichen Umlenkvorrichtung 13 verbindet.

Wird über die Druckluftleitung 14 Druckluft in den Heberfuß 12 geleitet, dann steigt diese in dem Steigrohr 11 nach oben. Durch die dadurch entstehende Aufwärtsströmung wird in den Trichter 9 rieselndes Schüttgut 8 in einen obenliegenden Spülraum 15 der Filterkammer 2 gefördert und dabei von anhaftenden Verunreinigungen befreit. Das Schüttgut 8 wird über die Umlenkvorrichtung 13 in die abströmseitige Hälfte der Filterkammer 2 ausgetragen, während das Spülwasser mit den Verunreinigungen über einen Spülwasserauslass 17 die Filterkammer 2 verlässt.

Das für diesen Spül- und Fördervorgang erforderliche Spülwasser läuft aus dem Rohwasserraum 3 über ein Spülwasser-Einlaufrohr 16 in einen den Trichter 9 umgebenden Vorlageraum 18, der über bodennahe Eintrittsschlitze 19 mit dem Trichter 9 verbunden ist.

Möglich ist es jedoch auch, zur Verbesserung des Abreinigungseffektes Spülwasser unter Druck über eine Druckwasserleitung 23 zuzuführen, nachdem ein Schieber 22 geschlossen wurde.

Bei Betrieb der Kläranlage strömt ständig Rohwasser, in der Zeichnung gesehen von links nach rechts, aus dem Rohwasserraum 3 horizontal durch das Schüttgut 8 der Filterkammer 2 in die Filtratkammer 4 und verlässt von dort das Klärbecken 1 über einen Überlauf 24, der niedriger angeordnet ist als der nicht gezeigte Einlauf in das Klärbecken, so dass bei Durchflussstillstand der Wasserspiegel im Klärbecken 1 höher ist als die Füllhöhe des Schüttgutes 8 in der Filterkammer 2.

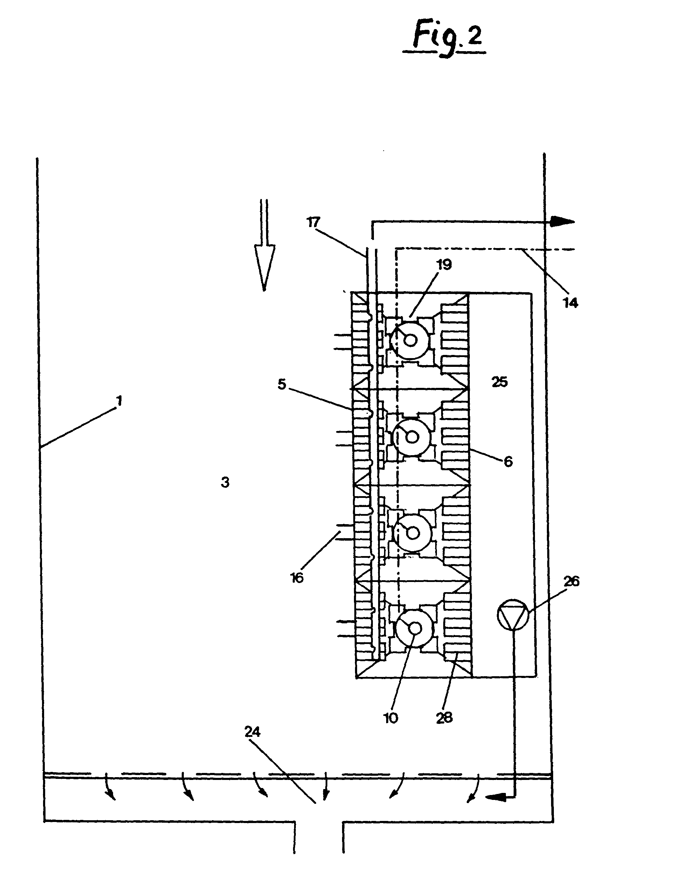

Die Figur 2 zeigt, dass mehrere Filterkammern 2 zusammengefügt an geeigneter Stelle in ein vorhandenes Klärbecken 1 nachträglich eingesetzt werden können, wenn die Filterkammern 2 mit einem abströmseitig sich anschließenden Filtratsammelraum 25 eine Baueinheit bilden und das Filtrat mit einer Filtratpumpe 26 in den höherliegenden Überlauf 24 gepumpt wird. Mit einer solchen Vorrichtung kann beispielsweise eine überwiegend gering anfallende Durchflussmenge durch Filtration nachbehandelt werden, während bei einem außergewöhnlich hohen Abwasserzufluss, zum Beispiel in der Mischung mit Regenwasser, die überschießende Menge an der Vorrichtung vorbei direkt in den Überlauf 24 gelangt.

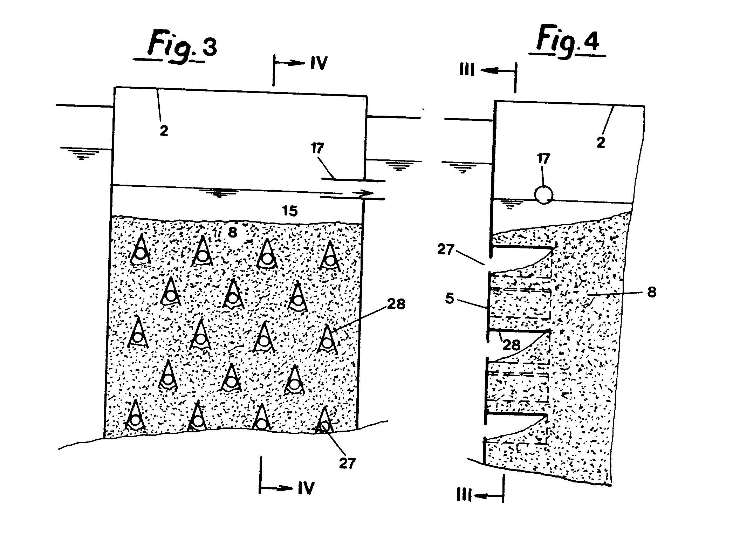

Die Figuren 3 und 4 zeigen als Vertikalschnitte in Vorder- und Seitenansicht jeweils von der Filterkammer 2 eine Wand 5. Diese Wand 5 hat mehrere nebeneinander und untereinander versetzt angeordnete Durchflussöffnungen 27. Auf der Innenseite der durchlässigen Wand 5 sind kurze Winkelbleche 28 dachartig angebracht. Sie weisen jeweils mit ihrer Spitze nach oben. Ihre Schenkel umschließen zwei Seiten der jeweiligen Durchflussöffnung 27 und reichen so weit nach unten, dass das Schüttgut nicht austreten kann. Die in den Figuren 3 und 4 nicht zu sehende durchlässige Wand 6 auf der Abströmseite ist spiegelbildlich, jedoch mit versetzten Durchflussöffnungen 27 zu der dargestellten, durchlässigen Wand 5 ausgebildet.

### Bezugszeichenliste

- 1: Klärbecken
- 2: Filterkammer
- 3: Rohwasserraum
- 4: Filtratkammer
- 5: Wand

- 6: Wand
- 8: Schüttgut
- 9: Trichter
- 10: Pumpe

- 11: Steigrohr
- 12: Heberfuß
- 13: Umlenkvorrichtung
- 14: Druckluftleitung
- 15: Spülraum

- 16: Spülwasser-Einlaufrohr
- 17: Spülwasserauslass
- 18: Vorlageraum
- 19: Eintrittsschlitz
- 22: Schieber
- 23: Druckwasserleitung
- 24: Überlauf
- 25: Filtrat-Sammelraum

- 26: Filtratpumpe
- 27: Durchflussöffnung
- 28: Winkelblech

## Patentansprüche

1. Filter mit einer horizontal durchströmten, Schüttgut (8) als Filtermedium aufweisenden Filterkammer (2), welche an der Anströmseite und Abströmseite jeweils eine durchlässige Wand (5, 6) zum Zurückhalten des Schüttgutes (8) in der Filterkammer (2) hat und in der eine als Druckluftheber ausgebildete Pumpe (10) zum Fördern des Schüttgutes in einem unteren Trichter (9) der Filterkammer (2) einen Heberfuß (12) hat, von dem aus ein Steigrohr (11) durch die Filterkammer (2) zu einem oberen Spülraum (15) führt, **dadurch gekennzeichnet,** dass der Trichter (9) bodennahe Eintrittsschlitze (19) aufweist und von einem Vorlageraum (18) umgeben ist, welcher mit einem ihn mit einem Rohwasserraum (3) verbindenden Spülwasser-Einlaufrohr (16) versehen ist.

2. Filter nach Anspruch 1, **dadurch gekennzeichnet,** dass das Steigrohr (11) im Spülraum (15) tangential an eine bogenförmige Umlenkvorrichtung (13) anschließend endet.

3. Filter nach zumindest einem der vorangehenden Ansprüche, **dadurch gekennzeichnet,** dass die Filterkammern (2) als aneinandersetzbare Moduleinheiten ausgebildet sind.

4. Filter nach zumindest einem der vorangehenden Ansprüche, **dadurch gekennzeichnet,** dass die Filterkammern (2) oder mehrere, aneinandergesetzte Filterkammern als Sperrwand eines horizontal durchströmten Klärbeckens (1) zur Abwasserreinigung angeordnet sind.

5. Filter nach zumindest einem der vorangehenden Ansprüche, **dadurch gekennzeichnet,** dass an der Abströmseite der Filterkammer (2) ein mit der Filterkammer (2) eine Baueinheit bildender Filtratsammelraum (25) angeordnet ist.

6. Filter nach zumindest einem der vorangehenden Ansprüche, **dadurch gekennzeichnet,** dass die Wände (5, 6) übereinander und nebeneinander mehrere, versetzt angeordnete Durchflussöffnungen (27) haben, welche jeweils auf der Innenseite mit einem vordachartigen Winkelblech (28) nach oben und zur Seite hin abgeschirmt sind, wobei die Spitze des Winkelbleches (28) nach oben weist und ihre beiden Schenkel unter die Unterkante der jeweiligen Durchflussöffnung (27) hinausreichen.

## Claims

1. Filter with a horizontal-pass filter chamber (2) containing bulk material (8) as filter medium and having permeable walls (5, 6) on its inflow side and outflow side to retain the bulk material (8) in the filter chamber (2), in which a pump (10) constructed as a compressed-air lift pump for transferring the bulk material has a lift foot (12) in a lower hopper (9) of the filter chamber (2) from which a rising main (11) leads through the filter chamber (2) to an upper flushing space (15), **characterized in that** the hopper (9) has inlet slits (19) near the bottom and is surrounded by a collector space (18) provided with a flushing-water inlet pipe (16) connecting it to an untreated-water space (3).

2. Filter according to Claim 1, **characterized in that** the rising main (11) terminates in the flushing space (15) at an arcuate deflector device (13) to which it is tangentially connected.

3. Filter according to at least one of the preceding claims, **characterized in that** the filter chambers (2) are constructed as juxtaposable modular units.

4. Filter according to at least one of the preceding claims, **characterized in that** the filter chambers (2) or a plurality of juxtaposed filter chambers are arranged as a dam wall of a horizontal-flow clarification tank (1) for sewage treatment.

5. Filter according to at least one of the preceding claims, **characterized in that** a filtrate collecting space (25) forming a structural unit with the filter chamber (2) is arranged on the outflow side of the filter chamber (2).

6. Filter according to at least one of the preceding claims, **characterized in that** the walls (5, 6) have a plurality of flow openings (27) in a staggered vertical and horizontal array, each such opening being shielded on the inside, above the opening and on either side, by a roof-like angle plate (28) with its apex pointing upwards and its two arms reaching below the lower edge of the flow opening (27) concerned.

## Revendications

1. Filtre comprenant une chambre de filtre (2) à écoulement horizontal qui contient une matière en vrac (8) en qualité de milieu filtrant, qui possède sur chacun de ses côtés d'arrivée du courant et de sortie du courant une paroi perméable (5, 6) destinée à retenir la matière en vrac (8) dans la chambre de filtre (2) et dans laquelle une pompe (10) pour la circulation de la matière en vrac, constituée par un élévateur à air comprimé, possède, dans une trémie inférieure (9) de la chambre de filtre (2), un siphon élévateur (12) d'où part un tube montant (11) qui mène à un compartiment de lavage supérieur (15) en traversant la chambre de filtre (2), caractérisé en ce que la trémie (9) présente des fentes d'entrée (19) proches du fond et est entourée d'un compartiment collecteur (18) qui est muni d'un tube (16) d'entrée d'eau de lavage le reliant à un espace d'eau brute (3).

2. Filtre selon la revendication 1, caractérisé en ce que le tube montant (11) débouche dans le compartiment de lavage (15) en se raccordant tangentiellement à un dispositif de renvoi en arc de cercle (13).

3. Filtre selon au moins une des revendications précédentes, caractérisé en ce que les chambres de filtre (2) sont constituées par des unités modulaires pouvant être juxtaposées.

4. Filtre selon au moins une des revendications précédentes, caractérisé en ce que les chambres de filtre (2) ou plusieurs chambres de filtre juxtaposées sont disposées pour former une paroi de retenue d'un bassin de décantation (1) pour l'épuration des eaux usées à écoulement horizontal.

5. Filtre selon au moins une des revendications précédentes, caractérisé en ce que, sur le côté de sortie de la chambre de filtre (2), est agencé un compartiment collecteur de filtrat (25) qui forme une unité modulaire avec la chambre de filtre (2).

6. Filtre selon au moins une des revendications précédentes, caractérisé en ce que les parois (5, 6) présentent plusieurs ouvertures de traversée (27) disposées les unes au-dessus et à côté des autres, dans des positions décalées, qui sont abritées vers le haut et vers le côté par une plaque pliée en angle (28) formant auvent, la pointe de la plaque pliée en angle (28) étant dirigée vers le haut et ses deux branches se prolongeant au-dessous du bord inférieur de l'ouverture de traversée (27) correspondante.
